# EUROPEAN PATENT SPECIFICATION

(11) **EP 1 622 400 B1**
(45) Date of publication and mention of the grant of the patent: **11.04.2007**
(21) Application number: 04103566.8
(22) Date of filing: 26.07.2004
(51) Int. Cl.: H04Q 7/22, H04L 29/06, H04L 12/56

(54) **Method and apparatus for soliciting connectivity from wireless data networks**
Verfahren und Vorrichtung zum Bewerben um die Konnektivität von drahtlosen Datennetzwerken
Procédé et dispositif pour la sollicitation de connectivité en réseaux de données sans fils

(43) Date of publication of application: 01.02.2006
(73) Proprietor: Research In Motion Limited, Waterloo, Ontario N2L 3W8 (CA)
(72) Inventor: Zhao, Wen, Kanata, Ontario K2M 2S8 (CA)
(74) Representative: Rickard, David John

(56) References cited:
- WO-A-20/04014035
- WO-A-20/04056142
- US-A- 6 088 600
- US-B1- 6 212 175

## Description

This application relates generally to wireless data devices in general, and to a method and apparatus for soliciting connectivity from wireless data networks, in particular.

Mobile IP and simple IP are two wireless IP implementations that exist in current wireless networks. Presently, simple IP is more widely used than mobile IP, at least partly because IP addresses are a scarce yet expensive network resource, and simple IP allows the network to dynamically assign IP addresses to wireless data devices. Consider, for example, wireless devices utilizing a CDMA2000® Radio Access Network (RAN) and the like, wherein a Packet Data Serving Node (PDSN) acts as an access gateway, providing both simple IP and mobile IP access. In such CDMA2000 networks, simple IP currently dominates. Typical wireless networks that use simple IP have an inactivity timer, and in the case of CDMA2000 and the like, the inactivity timer is implemented at the PDSN.

The PDSN starts the inactivity timer once it detects that a wireless data device's data traffic stops. When the inactivity timer expires, the network recollects the IP addresses assigned to the wireless data device and may assign it to other wireless data devices as needed. This results in large resource savings on the network side. However the recollection of IP address results in the wireless data device losing data service privilege to the network. This may not be acceptable for a wireless data device that needs to be always-connected such as those designed to receive push services, as push devices may appear to be inactive from the point of view of the inactivity timer, while in fact they may be quietly awaiting push services from push data servers.

In order to meet the always-connected requirement for push devices, one technique has wireless data devices send keep-alive data messages to the push data servers at a fixed interval. The simple IP inactivity timer at the PDSN is thereby refreshed implicitly each time the keep-alive data messages pass through the PDSN. Two problems exist with this technique. First, it may cause extra traffic at the push data server. Second, multiple wireless data devices may send keep-alive messages simultaneously, which may overload the capacity of the wireless data network.
[0004a] Various prior art solutions include means by which a mobile device can send messages to the network which may have the consequence of keeping a traffic channel active. One example includes International Patent Application WO 2004/056142 to Islam et al. This application is directed to power savings through the use of a fading timer. **[0004b]** A further reference of interest is U.S. Patent No. 6,212,175 to Harsch which teaches a method to sustain a TCP connection. The method includes a network sending messages to a mobile station and keeping alive the TCP connection if it receives acknowledgements from the mobile station.
[0004c] A further reference of interest is US Patent Application Publication No. 2004/0017792 to Khaleghi teaches a forward and reverse link inactivity timer maintained at a base station.
[0004d] A still further reference of interest is International Publication No.WO03040735 which discloses an arrangement for keeping a channel between a content host and a wireless data device open.

GENERAL

According to an aspect of the present application, there is provided a data node capable of communicating with a wireless data network on behalf of a wireless data device, comprising: a transceiver module that can send and receive user data traffic as well as send solicitation messages to the wireless data network on behalf of the wireless device; a processor that can detect the data activity of said transceiver; and a control module operating with said processor, adapted to cause solicitation messages to be sent to the wireless data network on behalf of the wireless data device through said transceiver, the control module adapted to: start a solicitation timer (302) upon detection of the absence of data traffic involving the wireless device; wait for the solicitation timer to expire (306); cancel the solicitation timer upon detection of data traffic involving the wireless data device; send a solicitation message to the wireless data network (307); and wait for the wireless data network to acknowledge receipt of the solicitation message.

In an embodiment the wireless data network has a data inactivity node that tracks the inactivity of the wireless data device using an inactivity timer, the processor can detect data inactivity at the transceiver module; and the control module operating with said processor is adapted to cause a solicitation message to be sent to the wireless data network on behalf of the wireless device through said transceiver upon the detection of data inactivity at said transceiver for a predetermined amount of time.

According to yet another aspect of the present application, there is provided a method of controlling the connectivity between a wireless data device and a wireless data network, the wireless data network comprising a data switching node maintaining an inactivity timer corresponding to the wireless data device, the expiration of the inactivity timer causing the wireless data device to be disconnected from the wireless data network, the method comprising the steps of: maintaining a solicitation timer at a solicitation data node; upon expiry of said solicitation timer, sending a solicitation message from the data solicitation node on behalf of the wireless data device to the data switching node; and upon reception of said solicitation message at the data switching node, resetting the inactivity timer at the data switching node.

Other aspects and features of the present application will become apparent to those ordinarily skilled in the art upon review of the following description of specific embodiments of a method and apparatus for soliciting connectivity from wireless data networks in conjunction with the accompanying figures.

### BRIEF DESCRIPTION OF THE DRAWINGS

FIG. 1 is a block diagram of an exemplary CDMA2000 wireless data network system with a wireless data device, provided in accordance with the techniques of the present application;
FIG. 2 is a block diagram showing in further detail the exemplary wireless data device of FIG 1;
FIG. 3 shows a data flow diagram in accordance with one embodiment of the present techniques of this application;
FIG. 4 is a block diagram showing further details of the exemplary PDSN of FIG 1;
FIG. 5 shows a data flow diagram in accordance with another embodiment of the present techniques of this application;
FIG. 6 illustrates in greater detail a known signalling and data flow among the wireless data device, PDSN and push data servers; and
FIG. 7 is a block diagram illustrating a mobile station apt to be used with preferred embodiments of the apparatus and method of the present application.

The same reference numerals are used in different FIGs. to denote similar elements.

### DESCRIPTION OF PREFERRED EMBODIMENTS

According to the embodiments of the techniques of this application, a solicitation data node sends solicitation messages periodically to a wireless gateway, such as a PDSN, when there is no data traffic between the wireless data device and a wireless data network. Each solicitation message resets the simple IP inactivity timer on the wireless gateway. When multiple wireless data devices send solicitation messages, the interval between subsequent transmissions of solicitation messages is randomised to reduce the probability of collision with the solicitations from other devices on the same wireless link. The solicitation timer, for instance, may be based on the simple IP inactivity timer setting on the wireless network, and the number of wireless data devices that the wireless data network serves. Expiration of the solicitation timer at the wireless data device or other data node causes the next solicitation message to be sent from or on behalf of the wireless data device.

In some embodiments, the techniques of this application only excise the network between a base station, such as a Base Transceiver Subsystem (BTS) and a wireless gateway, such as a PDSN. No extra traffic is required to be sent on the remainder of the data network in order to keep the wireless data device always connected. When a wireless data device stops using the wireless data connection, the device may tear down the simple IP connectivity either explicitly by sending a termination request or implicitly by not sending any further solicitation messages and relying on the inactivity timer expiration.

The techniques of this application are particularly well suited for use in Personal Digital Assistants, mobile communication devices, cellular phones, and wireless two-way communication devices (collectively referred to herein as "wireless data devices") that have data packet processing capability using the simple IP environment in a wireless network. The techniques of this application provide utility, however, in any device or system that has data packet processing capability using the simple IP environment in a wireless network.

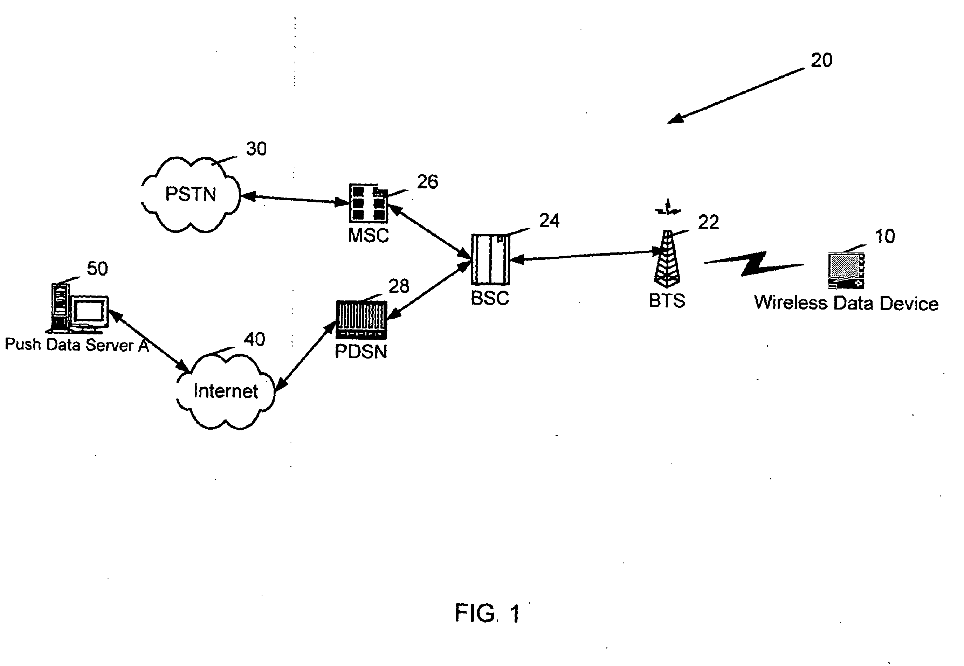

Referring now to the drawings, FIG. 1 is a block diagram of an exemplary CDMA2000 wireless data network system with a wireless data device, provided in accordance with the techniques of the present application. The CDMA2000 wireless data network system includes a wireless device 10, an exemplary 1x Code Division Multiple Access mixed circuit switched and packet switched CDMA2000 network 20, a Public Switched Telephone Network (PSTN) 30, Internet 40 and push data servers 50. The wireless data device 10 is preferably a two-way communication device having data and/or voice communication capabilities. CDMA2000 network 20 includes mixed circuit and packet switched components: the Base Transceiver Subsystem (BTS) 22 and the Base Station Controller (BSC) 24; a circuit switched only component: Mobile Switching Centre (MSC) 26; and a packet switched only component: Packet Data Serving Node (PDSN) 28.

Operationally, wireless device 10 communicates wirelessly with BTS 22 and BSC 24 to gain access to circuit switched services provided by MSC 26 - such as voice and Short Message Service (SMS) via PSTN 30. Wireless device 10 also communicates wirelessly with BTS 22 and BSC 24 to gain access to packet data services provided by PDSN 28 - such as e-mail, WAP, and other data services via Internet 40.

The CDMA2000 network system of FIG. 1 is meant to be an example only of a system that can embody the techniques of the present application. The techniques can be applied to other wireless data networks such as General Packet Radio Service (GPRS) or Universal Mobile Telecommunication System (UMTS), without departing from the spirit of the present application.

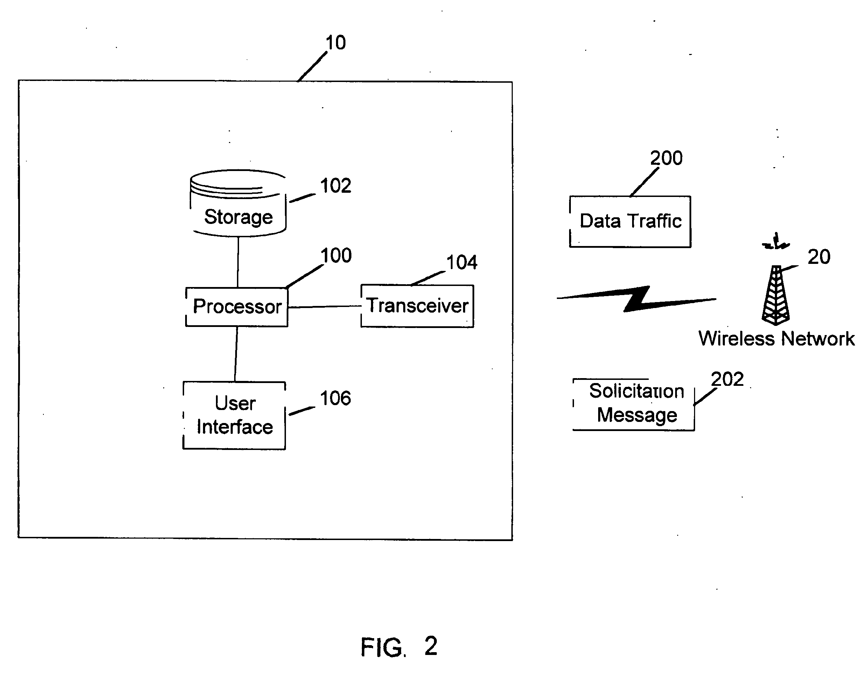

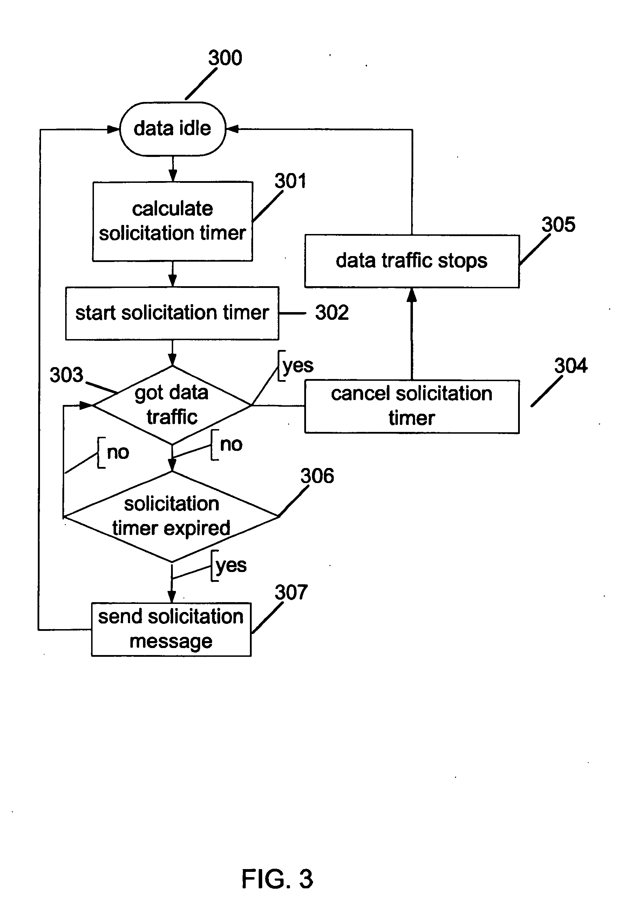

FIG. 2 is a block diagram showing in further detail the exemplary wireless data device of FIG. 1. The wireless data device 10 is preferably a two-way communication device having at least data or data/voice communication capabilities. Where the device 10 is enabled for two-way communications, the device incorporates a processor 100, a storage subsystem 102, a transceiver subsystem 104 and a user interface module 106. A control module within the microprocessor 100 controls the overall operation of the wireless data device. Communication functions, including signalling and user traffic between wireless data device 10 and wireless network 20 are performed through the transceiver subsystem 104. The processor 100 also interacts with further device subsystems such as the storage subsystem 102 and the user interface module 106. In order to prevent the network terminating the wireless device's data connectivity by dropping the wireless device's assigned simple IP address, wireless data device 10 sends a Solicitation Message 202 after data traffic 200 activity stops and before the network inactivity timer expires. This will be further explained in FIG. 3.

A predetermined set of applications that control basic device operations, including at least data communication applications for example, are normally installed on the device 10 during manufacture. A set of applications that may be loaded onto the device includes, but is not limited to, e-mail, calendar events, appointments, browser and task items. Such applications send and receive data items, via the CDMA2000 network 20 and Internet 40, to and from push data server 50. For voice communications, device 10 communicates with PSTN 30 via the CDMA2000 network 20.

Now referring to FIG. 3, FIG. 3 shows a data flow diagram in accordance with one embodiment of the present techniques of this application. Whenever the wireless data device enters data idle state 300, a solicitation timer is calculated 301 and started 302. The value of the solicitation timer may be based on factors such as the simple IP inactivity timer setting on the wireless network and/or the number of wireless data devices served in the wireless data network-and/or the duration of a Dynamic Host Configuration Protocol (DHCP) lease for the IP address of the wireless data device. The preferred value for the solicitation timer is any value that guarantees that the simple IP inactivity timer never expires. A further preferred value for the solicitation timer minimizes the solicitation traffic between wireless data device 10 and wireless data network 20. It is also desired that the interval between the subsequent transmissions of solicitation messages 202 is randomized to reduce the probability of multiple wireless data devices 10 sending solicitation messages 202 to wireless data network 20 at the same time, resulting in an overload of the wireless data network 20. If data traffic arrives 303 before a solicitation timer expires, the solicitation timer is cancelled 304. After the data traffic stops 305 and wireless data device 10 enters data idle state 300, another solicitation timer value is chosen 301 and the solicitation timer is started again 302. Whenever the solicitation timer expires 306, a Solicitation Message 202 is sent 307 to the wireless data network 20. Otherwise wireless data device continues to check if data traffic arrives 303. Once a Solicitation Message 202 is sent 307, wireless data device 10 enters data idle state 300 again; which results in another solicitation timer being calculated 301 and started 302. This process loops forever until the user shuts down the wireless data device 10, or otherwise disables the always-connected nature of the device 10, such as by turning off the radio.

In an alternate embodiment, the push data server 50 can also send solicitation message 202 to PDSN 28 on wireless data device 10's behalf. Once wireless data device 10 is powered on and communicating with wireless data network 20, wireless data device 10 notifies its simple IP address to push data server 50, after which data traffic is exchanged between wireless data device 10 and push data server 50. When the data traffic stops between wireless data device 10 and push data server 50, push data server 50 starts a solicitation timer in an analogous way as described in FIG. 3. When the solicitation timer expires, push data server 50 sends a solicitation message 202 to the PDSN 28 that the device is registered with. The time interval between the consecutive solicitation messages can be pre-configured at the push data server 50 according to the network settings. For instance, push data server 50 may contain a database in which are recorded the inactivity timer value of each network. The time interval between the consecutive solicitation messages can also be based on the network information obtained by the wireless data device 10 after it communicates to the wireless data network 20. The wireless data device 10 reports to the push data server 50 all the network information under which it is currently registered. The advantage of this alternate embodiment is that since wireless data devices do not have to send solicitation messages, battery life is extended at the wireless data devices.

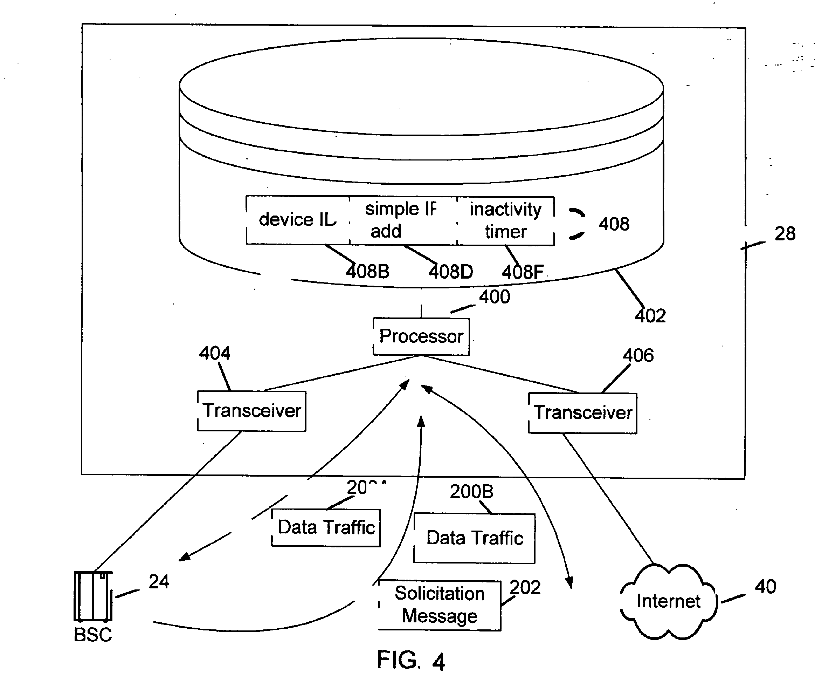

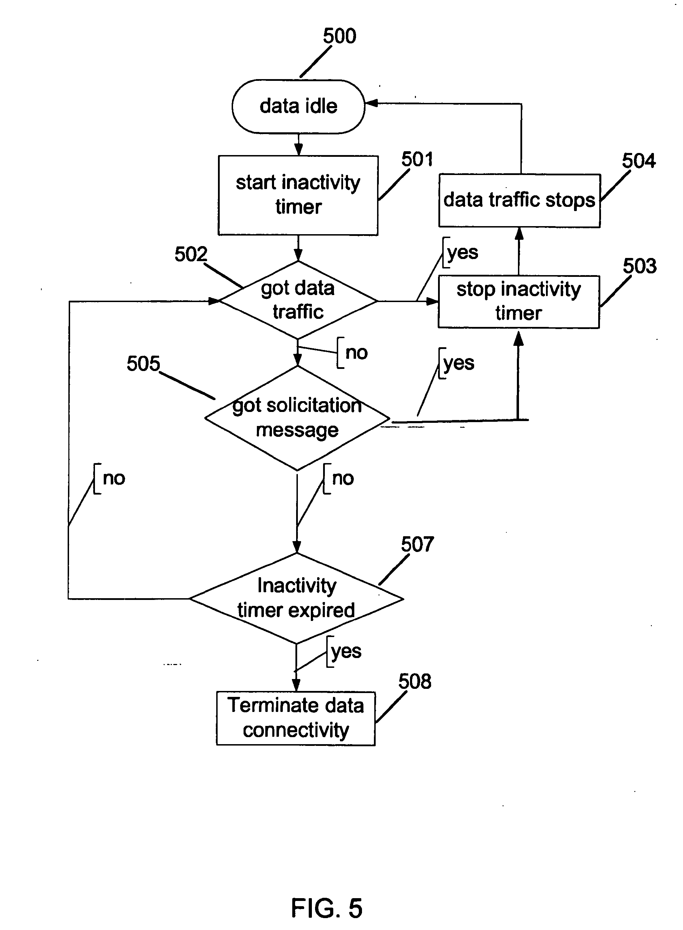

FIG. 4 is a block diagram showing further details of the exemplary PDSN of FIG. 1. Operationally it includes a processor 400, a storage subsystem 402, and two transceiver interfaces 404 and 406. The first transceiver interface 404 is used to receive Solicitation Message 202 from wireless data device 10 via BSC 24 and carry two way communication Data Traffic 200A between wireless data device 10 and PDSN 28. The second transceiver 406 is used to carry two-way communication Data Traffic 200B between PDSN 28 and push data server 50. Storage subsystem 402 has optional system record 408. Each row of the system record 408 represents all information for one wireless data device 10 and includes a device ID 408B or similar means of identifying at least one wireless data device 10, device simple IP address 408D, as well as device inactivity timer 408F associated with wireless data device 10. Processor 400 includes a control module that controls overall operation of PDSN 28. When Data Traffic 200A, 200B for wireless data device 10 arrives at PDSN 28 via transceiver interface 404, 406, the control module of processor 400 examines its system record 408 stored in storage subsystem 402 and stops inactivity timer 408F associated with that wireless data device ID 408B. Conversely when Data Traffic 200A, 200B stops arriving at PDSN 28 for wireless data device 10 via transceiver interface 404, 406, the control module of processor 400 examines its system record 408 stored in storage subsystem 402 and resets and starts inactivity timer 408F associated with that wireless data device ID 408B. When the inactivity timer 408F associated with that wireless data device ID 408B expires, processor 400 invalidates the simple IP address 408D associated with that wireless data device ID 408B, after which wireless data device 10's data connectivity is terminated. In order to prevent this from happening, wireless data device 10 sends Solicitation Message 202 periodically to PDSN 28 via transceiver interface 404 when there is no data traffic between wireless data server 50 and wireless device 10. When PDSN 28 receives Solicitation Message 202, the processor 400 examines its system record 408 stored in storage subsystem 402, if the simple IP address 408D associated with that wireless data device ID 408B is still valid, the control module of processor 400 will reset the inactivity timer 408F on behalf of wireless data device 10 which has an associated device ID 408B. This is further explained in FIG. 5. In practice, one PDSN usually serves multiple wireless data devices. Therefore PDSN may contain multiple system record 408, one for each wireless data device 10.

FIG. 5 shows a data flow diagram in accordance with another embodiment of the present techniques of this application. Whenever the data activity of wireless data device 10 at PDSN 28 enters data idle state 500, PDSN 28 starts an inactivity timer 501. If data traffic arrives 502 before the inactivity timer expires, PDSN 28 stops inactivity timer 503. When the data traffic stops 504 at PDSN 28, wireless data device 10 at PDSN 28 enters data idle state 500, and PDSN 28 starts another inactivity timer 501. If PDSN 28 receives a solicitation message 505 and before the inactivity timer expires, PDSN 28 stops the inactivity timer on wireless data device 10's behalf. Whenever the inactivity timer expires 507, PDSN 28 terminates the data connectivity 508 of wireless data device 10 by invalidating its assigned simple IP address. Otherwise PDSN 28 continues to monitor whether data traffic arrives 502 or it receives a solicitation message 505.

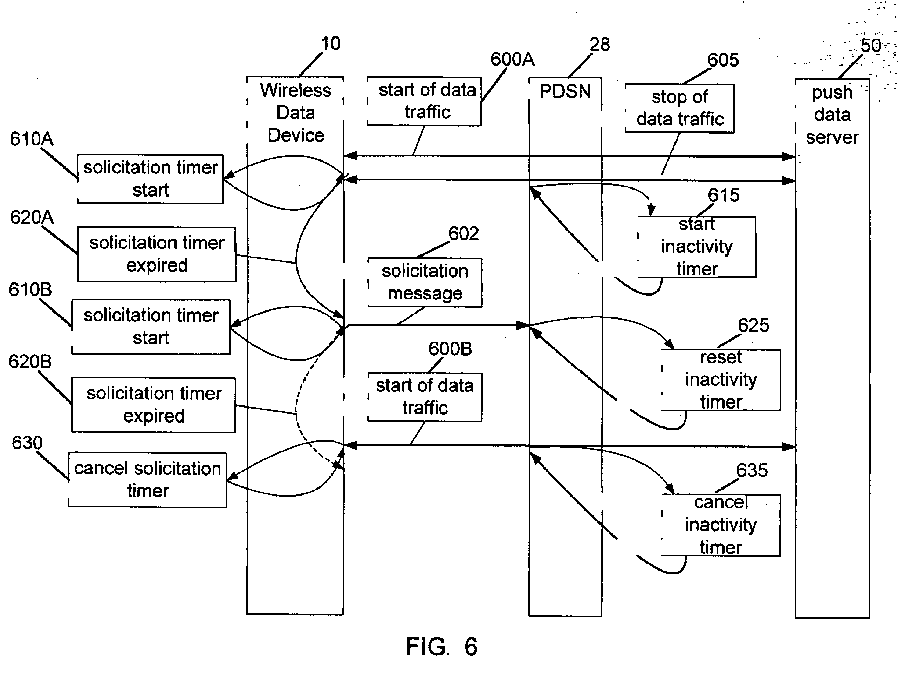

FIG. 6 illustrates in greater detail known signalling and data flow among the wireless data device, PDSN and push data servers Data Traffic flows between wireless data device 10 and push data server 50 in the time interval between start of data traffic 600A and stop of data traffic 605. When stop of data traffic 605 event occurs, solicitation timer start 610A is triggered within wireless data device 10. At the same time, those skilled in the art know that an inactivity timer start 615 is also triggered at PDSN 28 too. The value of inactivity timer is predetermined. The value of the solicitation timer setting is detailed in FIG. 3 and is less than the inactivity timer value setting. When the solicitation timer expires 620A, a solicitation message 602 is sent to PDSN 28. PDSN 28 will reset inactivity timer 625 after receiving a solicitation message 602 from wireless data device 10. Another solicitation timer start 610B is triggered at wireless data device 10 at the same time. Suppose a start of data traffic 600B is detected before the solicitation timer expiry 620B occurs, wireless data device 10 does a cancellation of the solicitation timer 630 while the PDSN 28 does a cancellation of inactivity timer 635.

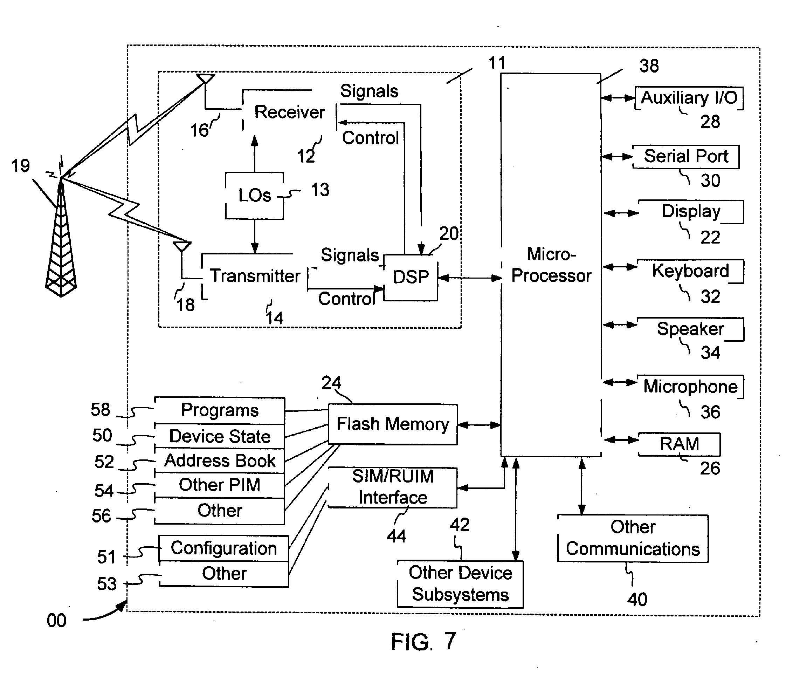

Referring to the drawings, FIG. 7 is a block diagram illustrating a mobile station apt to be used with preferred embodiments of the apparatus and method of the present application. Mobile station 700 is preferably a two-way wireless communication device having at least voice and data communication capabilities. Mobile station 700 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 700 is enabled for two-way communication, it will incorporate a communication subsystem 711, including both a receiver 712 and a transmitter 714, as well as associated components such as one or more, preferably embedded or internal, antenna elements 716 and 718, local oscillators (LOs) 713, and a processing module such as a digital signal processor (DSP) 720. As will be apparent to those skilled in the field of communications, the particular design of the communication subsystem 711 will be dependent upon the communication network in which the device is intended to operate. For example, mobile station 700 may include a communication subsystem 711 designed to operate within the Mobitex^{™} mobile communication system, the DataTAC^{™} mobile communication system, GPRS network, UMTS network, EDGE network or CDMA network.

Network access requirements will also vary depending upon the type of network 719. For example, in the Mobitex and DataTAC networks, mobile station 700 is registered on the network using a unique identification number associated with each mobile station. In UMTS and GPRS networks, and in some CDMA networks, however, network access is associated with a subscriber or user of mobile station 700. A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as "911" emergency calling, may be available, but mobile station 700 will be unable to carry out any other functions involving communications over the network 700. The SIM/RUIM interface 744 is normally similar to a card-slot into which a SIM/RUIM card can be inserted and ejected like a diskette or PCMCIA card. The SIM/RUIM card can have approximately 64K of memory and hold many key configuration 751, and other information 753 such as identification, and subscriber related information.

When required network registration or activation procedures have been completed, mobile station 700 may send and receive communication signals over the network 719. Signals received by antenna 716 through communication network 719 are input to receiver 712, which may perform such common receiver functions as signal amplification, frequency down conversion, filtering, channel selection and the like, and in the example system shown in FIG. 7, analog to digital (A/D) conversion. A/D conversion of a received signal allows more complex communication functions such as demodulation and decoding to be performed in the DSP 720. In a similar manner, signals to be transmitted are processed, including modulation and encoding for example, by DSP 720 and input to transmitter 714 for digital to analog conversion, frequency up conversion, filtering, amplification and transmission over the communication network 719 via antenna 718. DSP 720 not only processes communication signals, but also provides for receiver and transmitter control. For example, the gains applied to communication signals in receiver 712 and transmitter 714 may be adaptively controlled through automatic gain control algorithms implemented in DSP 720.

Mobile station 700 preferably includes a microprocessor 738 which controls the overall operation of the device. Communication functions, including at least data and voice communications, are performed through communication subsystem 711. Microprocessor 738 also interacts with further device subsystems such as the display 722, flash memory 724, random access memory (RAM) 726, auxiliary input/output (I/O) subsystems 728, serial port 730, keyboard 732, speaker 734, microphone 736, other communication subsystem 740 such as a short-range communications subsystem and any other device subsystems generally designated as 742.

Some of the subsystems shown in FIG. 7 perform communication-related functions, whereas other subsystems may provide "resident" or on-device functions. Notably, some subsystems, such as keyboard 732 and display 722, for example, may be used for both communication-related functions, such as entering a text message for transmission over a communication network, and device-resident functions such as a calculator or task list.

Operating system software used by the microprocessor 738 is preferably stored in a persistent store such as flash memory 724, which may instead be a read-only memory (ROM) or similar storage element (not shown). Those skilled in the art will appreciate that the operating system, specific device applications, or parts thereof, may be temporarily loaded into a volatile memory such as RAM 726. Received communication signals may also be stored in RAM 726.

As shown, flash memory 724 can be segregated into different areas for both computer programs 758 and program data storage 750, 752, 754 and 756. These different storage types indicate that each program can allocate a portion of flash memory 724 for their own data storage requirements. Microprocessor 738, in addition to its operating system functions, preferably enables execution of software applications on the mobile station. A predetermined set of applications that control basic operations, including at least data and voice communication applications for example, will normally be installed on mobile station 700 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 719. In a preferred embodiment, the PIM data items are seamlessly integrated, synchronized and updated, via the wireless network 719, with the mobile station user's corresponding data items stored or associated with a host computer system. Further applications may also be loaded onto the mobile station 700 through the network 719, an auxiliary I/O subsystem 728, serial port 730, short-range communications subsystem 740 or any other suitable subsystem 742, and installed by a user in the RAM 726 or preferably a non-volatile store (not shown) for execution by the microprocessor 738. Such flexibility in application installation increases the functionality of the device and may provide enhanced on-device functions, communication-related functions, or both. For example, secure communication applications may enable electronic commerce functions and other such financial transactions to be performed using the mobile station 700.

In a data communication mode, a received signal such as a text message or web page download will be processed by the communication subsystem 711 and input to the microprocessor 738, which preferably further processes the received signal for output to the display 722, or alternatively to an auxiliary I/O device 728. A user of mobile station 700 may also compose data items such as email messages for example, using the keyboard 732, which is preferably a complete alphanumeric keyboard or telephone-type keypad, in conjunction with the display 722 and possibly an auxiliary I/O device 728. Such composed items may then be transmitted over a communication network through the communication subsystem 711.

For voice communications, overall operation of mobile station 700 is similar, except that received signals would preferably be output to a speaker 734 and signals for transmission would be generated by a microphone 736. Alternative voice or audio I/O subsystems, such as a voice message recording subsystem, may also be implemented on mobile station 700. Although voice or audio signal output is preferably accomplished primarily through the speaker 734, display 722 may also be used to provide an indication of the identity of a calling party, the duration of a voice call, or other voice call related information for example.

Serial port 730 in FIG. 7, would normally be implemented in a personal digital assistant (PDA)-type mobile station for which synchronization with a user's desktop computer (not shown) may be desirable, but is an optional device component. Such a port 730 would enable a user to set preferences through an external device or software application and would extend the capabilities of mobile station 700 by providing for information or software downloads to mobile station 700 other than through a wireless communication network. The alternate download path may for example be used to load an encryption key onto the device through a direct and thus reliable and trusted connection to thereby enable secure device communication.

Other communications subsystems 740, such as a short-range communications subsystem, is a further optional component which may provide for communication between mobile station 700 and different systems or devices, which need not necessarily be similar devices. For example, the subsystem 740 may include an infrared device and associated circuits and components or a Bluetooth^{™} communication module to provide for communication with similarly enabled systems and devices.

It is envisaged that, in addition to resetting the inactivity timer, a solicitation message optionally causes any Dynamic Host Configuration Protocol (DHCP) leases associated with the IP address of the wireless device to be renewed. This can be accomplished by adapting the data node which receives solicitation messages, such as a PDSN, to send a renew lease message to the DHCP server that configured the IP address, the renew lease message being sent upon reception of a solicitation message at the PDSN.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A solicitation data node (50) for sending solicitation messages to cancel inactivity timers in a wireless data network (22, 24) on behalf of a wireless data device (10), comprising:
a transceiver module that can send and receive user data traffic (200) as well as send solicitation messages (202) on behalf of the wireless data device to the wireless data network;
a processor that can detect the data activity of said transceiver; and
a control module operating with said processor, adapted to cause solicitation messages to be sent to the wireless data network on behalf of the wireless data device through said transceiver, the control module adapted to:
start a solicitation timer (302) upon detection of the absence of data traffic involving the wireless device;
wait for the solicitation timer to expire (306);
cancel the solicitation timer upon detection of data traffic involving the wireless data device;
send a solicitation message to the wireless data network (307) upon expiry of said solicitation timer; and
wait for the wireless data network to acknowledge receipt of the solicitation message,
wherein the solicitation data node is a push data server (50).

2. The node of claim 1, where in use the solicitation node is connected to the wireless data network and is arranged to send solicitation messages to the wireless data network but not the wireless data device.

3. The node of claim 1 or 2, wherein the wireless data network has a data inactivity node that tracks the inactivity of the wireless data device using an inactivity timer, and
wherein the processor can detect data inactivity at said transceiver module; and
the control module operating with said processor is adapted to cause a solicitation message to be sent to the wireless data network on behalf of the wireless device through said transceiver upon the detection of data inactivity at said transceiver for a predetermined amount of time.

4. The node of claim 1, 2 or 3, wherein the wireless data network is selected from the group consisting of Mobitex, Datatac, CDMA, GPRS, and UMTS wireless data networks.

5. A data node of any one preceding claim wherein the control module is further adapted to:
detect the presence of data activity between said wireless data device and a data node; and
cancel the solicitation timer (304).

6. The node of any one preceding claim, wherein the solicitation message is sent at a time that is randomized to minimise the wireless data network load.

7. The node of any one preceding claim, wherein the solicitation timer value is less than or equal to the value of the inactivity timer.

8. The node of claim 7, wherein the solicitation timer value is randomised to minimize the wireless data network load.

9. The node of any one preceding claim, wherein the data connectivity uses simple IP.

10. A method of controlling the connectivity between a wireless data device (10) and a wireless data network (22, 24), the wireless data network comprising a data switching node (28) maintaining an inactivity timer corresponding to the wireless data device, the expiration of the inactivity timer causing the wireless data device to be disconnected from the wireless data network, the method comprising the steps of:
maintaining a solicitation timer at a solicitation data node (50);
starting the solicitation timer upon detection of the absence of data traffic involving the wireless data device;
cancelling the solicitation timer upon detection of data traffic involving the wireless device;
upon expiry of said solicitation timer, sending a solicitation message (202) from the solicitation data node (50) on behalf of the wireless data device (10) to the data switching node (28); and
upon reception of said solicitation message at the data switching node, resetting the inactivity timer (408) at the data switching node.

11. The method as claimed in claim 10, further comprising the step of detecting data traffic involving the wireless data device (303).

12. The method as claimed in claim 11, further comprising the steps of stopping the inactivity timer upon detection of the data traffic (503).

13. The method as claimed in any of claims 10 to 12, further comprising the steps of detecting the absence of data traffic involving the wireless data device (305).

14. The method as claimed in claim 13, further comprising the steps of starting the solicitation timer upon detection of the absence of data traffic (301).

15. The method as claimed in claim 13 or 14, further comprising the steps of starting the inactivity timer upon detection of the absence of data traffic (501).

16. The method as claimed in any one of claims 10 to 15, further comprising the step of calculating the value of the solicitation timer as a function of the value of the inactivity timer.

17. The method as claimed in claim 16, wherein the solicitation timer value is less than the inactivity timer value to keep the wireless data device always connected to the wireless data network.

18. The method as claimed in claim 16, wherein the solicitation timer value is greater than the inactivity timer value to terminate the wireless data device connectivity to the wireless data network.

19. The method as claimed in any one of claims 16 to 18, wherein the value of the inactivity timer is offset from at least one other inactivity timer corresponding to at least one other wireless data device to minimize wireless data network load.

20. The method as claimed in any one of claims 10 to 19, wherein the wireless data network (22, 24) is a CDMA network.

21. The method as claimed in claim 20, wherein the data switching node (28) is a packet data switching node.

22. The method as claimed in claim 10 to 21, wherein the wireless data network (22, 24) is a GPRS network.

23. The method as claimed in claim 22, wherein the data switching node (28) is a GPRS switching node.

24. The method as claimed in claim 23, wherein the data switching node (28) is a gateway GPRS switching node.

25. The method as claimed in claim 23, wherein the data switching node (28) is a serving GPRS switching node.

26. The method as claimed in any one of claims 10 to 25, wherein the connectivity uses simple Internet Protocol.

27. A method of operating a solicitation data node (50) for sending solicitation messages to cancel inactivity timers in a wireless data network on behalf of a wireless data device (10), the node being a push data server and comprising a transceiver module that can send and receive user data traffic (200), the method comprising:
detecting data activity of said transceiver;
starting a solicitation timer (302) upon detection of the absence of data traffic involving the wireless device;
waiting for the solicitation timer to expire (306);
cancelling the solicitation timer upon detection of data traffic involving the wireless data device;
sending a solicitation message to the wireless data network (307) upon expiry of said solicitation timer;
waiting for the wireless data network to acknowledge receipt of the solicitation message; and
sending solicitation messages (202) to the wireless data network on behalf of the wireless data device through said transceiver.

28. A method according to claim 27, wherein the solicitation message is not sent to the wireless data device.

## Patentansprüche

1. Ein Anforderungsdatenkoten (50) zum Senden von Anforderungsmitteilungen, um im Namen einer drahtlosen Datenvorrichtung (10) Inaktivitätszeitgeber in einem drahtlosen Datennetz (22, 24) zu löschen, der Folgendes umfasst:
ein Sendeempfängermodul, das im Namen der drahtlosen Datenvorrichtung Benutzerdatenverkehr (200) senden und empfangen sowie Anforderungsmitteilungen (202) zu dem drahtlosen Datennetz senden kann;
einen Prozessor, der die Datenaktivität des Sendeempfängers erfassen kann; und
ein Steuermodul, das mit dem Prozessor betrieben wird und dafür ausgelegt ist, zu veranlassen, dass im Namen der drahtlosen Datenvorrichtung Anforderungsmitteilungen durch den Sendeempfänger zu dem drahtlosen Datennetz gesendet werden, wobei das Steuermodul dafür ausgelegt ist:
bei Erfassen der Abwesenheit von Datenverkehr, an dem die drahtlose Vorrichtung beteiligt ist, einen Anforderungszeitgeber (302) zu starten;
darauf zu warten, dass der Anforderungszeitgeber abläuft (306);
den Anforderungszeitgeber bei Erfassen von Datenverkehr, an dem die drahtlose Datenvorrichtung beteiligt ist, zu löschen;
bei Ablauf des Anforderungszeitgebers eine Anforderungsmitteilung zu dem drahtlosen Datennetz (307) zu senden; und
darauf zu warten, dass das drahtlose Datennetz den Empfang der Anforderungsmitteilung bestätigt,
wobei der Anforderungsdatenknoten ein Druckdatenserver (50) ist.

2. Knoten nach Anspruch 1, wobei der Anforderungsknoten bei Gebrauch mit dem drahtlosen Datennetz verbunden ist und dafür ausgelegt ist, Anforderungsmitteilungen zu dem drahtlosen Datennetz, jedoch nicht zu der drahtlosen Datenvorrichtung zu senden.

3. Knoten nach Anspruch 1 oder 2, wobei das drahtlose Datennetz einen Dateninaktivitätsknoten aufweist, der unter Verwendung eines Inaktivitätszeitgebers die Inaktivität der drahtlosen Datenvorrichtung verfolgt, und
wobei der Prozessor eine Dateninaktivität an dem Sendeempfängermodul erfassen kann; und
wobei das Steuermodul, das mit dem Prozessor betrieben wird, dafür ausgelegt ist, zu veranlassen, dass bei Erfassen von Dateninaktivität an dem Sendeempfänger für eine vorherbestimmte Zeitspanne im Namen der drahtlosen Vorrichtung eine Anforderungsmitteilung durch den Sendeempfänger zu dem drahtlosen Datennetz gesendet wird.

4. Knoten nach Anspruch 1, 2 oder 3, wobei das drahtlose Datennetz aus der Gruppe ausgewählt wird, die aus den drahtlosen Datennetzen Mobitex, Datatac, CDMA, GPRS und UMTS besteht.

5. Datenknoten nach einem der vorhergehenden Ansprüche, wobei das Steuermodul des Weiteren dafür ausgelegt ist:
die Anwesenheit von Datenaktivität zwischen der drahtlosen Datenvorrichtung und einem Datenknoten zu erfassen; und
den Anforderungszeitgeber (304) zu löschen.

6. Knoten nach einem der vorhergehenden Ansprüche, wobei die Anforderungsmitteilung zu einem Zeitpunkt gesendet wird, der randomisiert ist, um die Belastung des drahtlosen Datennetzes zu minimieren.

7. Knoten nach einem der vorhergehenden Ansprüche, wobei der Anforderungszeitgeberwert kleiner oder gleich dem Wert des Inaktivitätszeitgebers ist.

8. Knoten nach Anspruch 7, wobei der Anforderungszeitgeberwert randomisiert ist, um die Belastung des drahtlosen Datennetzes zu minimieren.

9. Knoten nach einem der vorhergehenden Ansprüche, wobei die Datenkonnektivität ein einfaches IP verwendet.

10. Verfahren zur Steuerung der Konnektivität zwischen einer drahtlosen Datenvorrichtung (10) und einem drahtlosen Datennetz (22, 24), wobei das drahtlose Datennetz einen Datenvermittlungsknoten (28) umfasst, der einen Inaktivitätszeitgeber unterhält, der zu der drahtlosen Datenvorrichtung gehört,
wobei der Ablauf des Inaktivitätszeitgebers veranlasst, dass die drahtlose Datenvorrichtung von dem drahtlosen Datennetz getrennt wird, wobei das Verfahren folgende Schritte umfasst:
Unterhalten eines Anforderungszeitgebers an einem Anforderungsdatenknoten (50);
Starten des Anforderungszeitgebers bei Erfassen der Abwesenheit von Datenverkehr, an dem die drahtlose Datenvorrichtung beteiligt ist;
Löschen des Anforderungszeitgebers bei Erfassen von Datenverkehr, an dem die drahtlose Datenvorrichtung beteiligt ist;
bei Ablauf des Anforderungszeitgebers Senden einer Anforderungsmitteilung (202) im Namen der drahtlosen Datenvorrichtung (10) von dem Anforderungsdatenknoten (50) zu dem Datenvermittlungsknoten (28); und bei Empfang der Anforderungsmitteilung am Datenvermittlungsknoten Rücksetzen des Inaktivitätszeitgebers (408) am Datenvermittlungsknoten.

11. Verfahren nach Anspruch 10, das des Weiteren den Schritt des Erfassens von Datenverkehr, an dem die drahtlose Datenvorrichtung (303) beteiligt ist, umfasst.

12. Verfahren nach Anspruch 11, das des Weiteren die Schritte des Stoppens des Inaktivitätszeitgebers bei Erfassen des Datenverkehrs (503) umfasst.

13. Verfahren nach einem der Ansprüche 10 bis 12, das des Weiteren die Schritte des Erfassens der Abwesenheit von Datenverkehr, an dem die drahtlose Datenvorrichtung (305) beteiligt ist, umfasst.

14. Verfahren nach Anspruch 13, das des Weiteren die Schritte des Startens des Anforderungszeitgebers bei Erfassen der Abwesenheit von Datenverkehr (301) umfasst.

15. Verfahren nach Anspruch 13 oder 14, das des Weiteren die Schritte des Startens des Inaktivitätszeitgebers bei Erfassen der Abwesenheit von Datenverkehr (501) umfasst.

16. Verfahren nach einem der Ansprüche 10 bis 15, das des Weiteren den Schritt des Berechnens des Werts des Anforderungszeitgebers als Funktion des Werts des Inaktivitätszeitgebers umfasst.

17. Verfahren nach Anspruch 16, wobei der Anforderungszeitgeberwert kleiner ist als der Inaktivitätszeitgeberwert, um die drahtlose Datenvorrichtung stets mit dem drahtlosen Datennetz verbunden zu halten.

18. Verfahren nach Anspruch 16, wobei der Anforderungszeitgeberwert größer ist als der Inaktivitätszeitgeberwert, um die Konnektivität der drahtlosen Datenvorrichtung mit dem drahtlosen Datennetz zu beenden.

19. Verfahren nach einem der Ansprüche 16 bis 18, wobei der Wert des Inaktivitätszeitgebers zu mindestens einem anderen Inaktivitätszeitgeber versetzt ist, der zu mindestens einer anderen drahtlosen Datenvorrichtung gehört, um die Belastung des drahtlosen Datennetzes zu minimieren.

20. Verfahren nach einem der Ansprüche 10 bis 19, wobei das drahtlose Datennetz (22, 24) ein CDMA-Netz ist.

21. Verfahren nach Anspruch 20, wobei der Datenvermittlungsknoten (28) ein Paketdatenvermittlungsknoten ist.

22. Verfahren nach Anspruch 10 bis 21, wobei das drahtlose Datennetz (22, 24) ein GPRS-Netz ist.

23. Verfahren nach Anspruch 22, wobei der Datenvermittlungsknoten (28) ein GPRS-Vermittlungsknoten ist.

24. Verfahren nach Anspruch 23, wobei der Datenvermittlungsknoten (28) ein Überleiteinrichtungs-GPRS-Vermittlungsknoten ist.

25. Verfahren nach Anspruch 23, wobei der Datenvermittlungsknoten (28) ein Server-GPRS-Vermittlungsknoten ist.

26. Verfahren nach einem der Ansprüche 10 bis 25, wobei die Konnektivität ein einfaches Internet Protokoll verwendet.

27. Verfahren zum Betrieb eines Anforderungsdatenknotens (50) zum Senden von Anforderungsmitteilungen zum Löschen von Inaktivitätszeitgebern in einem drahtlosen Datennetz im Namen einer drahtlosen Datenvorrichtung (10), wobei der Knoten ein Druckdatenserver ist und ein Sendeempfängermodul umfasst, das Benutzerdatenverkehr (200) senden und empfangen kann, wobei das Verfahren Folgendes umfasst:
Erfassen von Datenaktivität des Sendeempfängers;
bei Erfassen der Abwesenheit von Datenverkehr, an dem die drahtlose Vorrichtung beteiligt ist, Starten eines Anforderungszeitgebers (302);
Warten, dass der Anforderungszeitgeber abläuft (306);
Löschen des Anforderungszeitgebers bei Erfassen von Datenverkehr, an dem die drahtlose Datenvorrichtung beteiligt ist;
bei Ablauf des Anforderungszeitgebers Senden einer Anforderungsmitteilung zum drahtlosen Datennetz (307);
Warten, dass das drahtlose Datennetz den Empfang der Anforderungsmitteilung bestätigt; und
Senden von Anforderungsmitteilungen (202) durch den Sendeempfänger zum drahtlosen Datennetz im Namen der drahtlosen Datenvorrichtung.

28. Verfahren nach Anspruch 27, wobei die Anforderungsmitteilung nicht zu der drahtlosen Datenvorrichtung gesendet wird.

## Revendications

1. Un noeud de données de requête (50) servant à envoyer des messages de requête pour annuler des temporisateurs d'inactivité dans un réseau de données sans fil (22, 24) de la part d'un dispositif de données sans fil (10), comprenant :
un module émetteur/récepteur pouvant envoyer et recevoir un trafic de données utilisateur (200) ainsi qu'envoyer des messages de requête (202) de la part du dispositif de données sans fil au réseau de données sans fil ;
un processeur pouvant détecter l'activité de données dudit émetteur/récepteur ; et
un module de gestion, fonctionnant avec ledit processeur, adapté pour faire que les messages de requête soient envoyés au réseau de données sans fil de la part du dispositif de données sans fil par ledit émetteur/récepteur,
ledit module de gestion étant adapté pour :
démarrer un temporisateur de requête (302) lorsqu'une absence de trafic de données impliquant le dispositif sans fil est détectée ;
attendre l'expiration de la période du temporisateur de requête (306) ;
annuler le temporisateur de requête dès qu'un trafic de données impliquant le dispositif de données sans fil est détecté ;
envoyer un message de requête au réseau de données sans fil (307) à l'expiration de la période dudit temporisateur de requête ; et
attendre que le réseau de données sans fil accuse réception du message de requête,
le noeud de données de requête étant un serveur de données « push » (50).

2. Noeud de la revendication 1 dans lequel, lorsque utilisé, le noeud de requête est connecté au réseau de données sans fil et organisé pour envoyer des messages de requête au réseau de données sans fil mais pas au dispositif de données sans fil.

3. Noeud de la revendication 1 ou 2 dans lequel le réseau de données sans fil a un noeud d'inactivité de données contrôlant l'inactivité du dispositif de données sans fil en utilisant un temporisateur d'inactivité, et
dans lequel le processeur peut détecter une inactivité de données au niveau dudit module d' émetteur/récepteur ; et
dans lequel le module de gestion fonctionnant avec ledit processeur est adapté pour faire qu'un message de requête soit envoyé au réseau de données sans fil de la part du dispositif de données sans fil par ledit émetteur/récepteur lorsqu'une inactivité de données au niveau dudit émetteur/récepteur est détectée pendant une durée prédéterminée.

4. Noeud de la revendication 1, 2 ou 3, dans lequel le réseau de données sans fil est sélectionné parmi le groupe constitué des réseaux de données sans fil Mobitex, Datatac, CDMA, GPRS et UMTS.

5. Noeud de données de l'une quelconque des revendications précédentes dans lequel le module de gestion est adapté en outre pour :
détecter la présence d'activité de données entre ledit dispositif de données sans fil et un noeud de données ; et
annuler le temporisateur de requête (304).

6. Noeud de l'une quelconque des précédentes revendications dans lequel le message de requête est envoyé à un moment qui est randomisé pour minimiser la charge du réseau de données sans fil.

7. Noeud de l'une quelconque des précédentes revendications dans lequel la valeur du temporisateur de requête est inférieure ou égale à la valeur du temporisateur d'inactivité.

8. Noeud de la revendication 7 dans lequel la valeur du temporisateur de requête est randomisée pour minimiser la charge du réseau de données sans fil.

9. Noeud de l'une quelconque des précédentes revendications dans lequel la connectivité de données utilise un protocole IP simple.

10. Un procédé pour gérer la connectivité entre un dispositif de données sans fil (10) et un réseau de données sans fil (22, 24), ce dernier comprenant un noeud de commutation de données (28) qui maintient un temporisateur d'inactivité correspondant au dispositif de données sans fil, l'expiration de la période du temporisateur d'inactivité entraînant la déconnexion du dispositif de données sans fil du réseau de données sans fil, le procédé comportant les étapes suivantes :
maintenir un temporisateur de requête au niveau d'un noeud de données de requête (50) ;
démarrer un temporisateur de requête dès qu'une absence de trafic de données impliquant le dispositif de données sans fil est détectée ;
annuler le temporisateur de requête dès qu'un trafic de données impliquant le dispositif sans fil est détecté ;
à l'expiration de la période dudit temporisateur de requête, envoyer un message de requête (202) à partir du noeud de données de requête (50) de la part du dispositif de données sans fil (10) au noeud de commutation de données (28) ; et
lorsque ledit message de requête au niveau du noeud de commutation de données est reçu, réinitialiser le temporisateur d'inactivité (408) au niveau du noeud de commutation de données.

11. Procédé tel que revendiqué à la revendication 10 comprenant en outre l'étape de détection de trafic de données impliquant le dispositif de données sans fil (303).

12. Procédé tel que revendiqué à la revendication 11 comprenant en outre les étapes d'arrêt du temporisateur d'inactivité lorsqu'un trafic de données est détecté (503).

13. Procédé tel que revendiqué dans l'une quelconque des revendications 10 à 12 comprenant en outre les étapes de détection d'absence de trafic de données impliquant le dispositif de données sans fil (305).

14. Procédé tel que revendiqué à la revendication 13 comprenant en outre les étapes de démarrage du temporisateur de requête lorsqu'une absence de trafic de données est détectée (301).

15. Procédé tel que revendiqué à la revendication 13 ou 14 comprenant en outre les étapes de démarrage du temporisateur d'inactivité lorsqu'une absence de trafic de données est détectée (501).

16. Procédé tel que revendiqué dans l'une quelconque des revendications 10 à 15 comprenant en outre l'étape de calcul de la valeur du temporisateur de requête en fonction de la valeur du temporisateur d'inactivité.

17. Procédé tel que revendiqué à la revendication 16 dans lequel la valeur du temporisateur de requête est inférieure à la valeur du temporisateur d'inactivité pour maintenir une connexion permanente du dispositif de données sans fil au réseau de données sans fil.

18. Procédé tel que revendiqué à la revendication 16 dans lequel la valeur du temporisateur de requête est supérieure à la valeur du temporisateur d'inactivité pour arrêter la connectivité du dispositif de données sans fil au réseau de données sans fil.

19. Procédé tel que revendiqué dans l'une quelconque des revendications 16 à 18 dans lequel la valeur du temporisateur d'inactivité est décalée par rapport à au moins un autre temporisateur d'inactivité correspondant à au moins un autre dispositif de données sans fil afin de minimiser la charge sur le réseau de données sans fil.

20. Procédé tel que revendiqué dans l'une quelconque des revendications 10 à 19 dans lequel le réseau de données sans fil (22, 24) est un réseau CDMA.

21. Procédé tel que revendiqué à la revendication 20 dans lequel le noeud de commutation de données (28) est un noeud de commutation de données par paquets.

22. Procédé tel que revendiqué dans les revendications 10 à 21 dans lequel le réseau de données sans fil (22, 24) est un réseau GPRS.

23. Procédé tel que revendiqué à la revendication 22 dans lequel le noeud de commutation de données (28) est un noeud de commutation GPRS.

24. Procédé tel que revendiqué à la revendication 23 dans lequel le noeud de commutation de données (28) est un noeud de commutation GPRS passerelle.

25. Procédé tel que revendiqué à la revendication 23 dans lequel le noeud de commutation de données (28) est un noeud de commutation GPRS serveur.

26. Procédé tel que revendiqué dans l'une quelconque des revendications 10 à 25 dans lequel la connectivité utilise un protocole IP (Internet Protocol) simple.

27. Procédé d'exploitation d'un noeud de données de requête (50) servant à envoyer des messages de requête pour annuler des temporisateurs d'inactivité dans un réseau de données sans fil de la part d'un dispositif de données sans fil (10), le noeud étant un serveur de données « push » et comprenant un module émetteur/récepteur qui peut envoyer et recevoir un trafic de données utilisateur (200), le procédé comprenant les étapes suivantes :
détecter l'activité de données dudit émetteur/récepteur ;
démarrer un temporisateur de requête (302) dès qu'une absence de trafic de données impliquant le dispositif sans fil a été détectée ;
attendre l'expiration de la période du temporisateur de requête (306) ;
annuler le temporisateur de requête dès qu'un trafic de données impliquant le dispositif de données sans fil a été détecté ;
envoyer un message de requête au réseau de données sans fil (307) à l'expiration de la période dudit temporisateur de requête ;
attendre que le réseau de données sans fil accuse réception du message de requête, et
envoyer des messages de requête (202) au réseau de données sans fil de la part du dispositif de données sans fil au moyen dudit émetteur/récepteur.

28. Procédé conforme la revendication 27 dans lequel le message de requête n'est pas envoyé au dispositif de données sans fil.
